# EUROPEAN PATENT SPECIFICATION

(11) **EP 1 576 838 B1**
(45) Date of publication and mention of the grant of the patent: **26.02.2014**
(21) Application number: 02794132.7
(22) Date of filing: 05.12.2002
(51) Int. Cl.: H04W 72/04

(54) **ALLOCATING A CHANNEL RESOURCE IN A SYSTEM**
ZUWEISUNG EINER KANALQUELLE IN EINEM SYSTEM
ATTRIBUTION D'UNE RESSOURCE DE CANAL DANS UN SYSTEME

(43) Date of publication of application: 21.09.2005
(73) Proprietor: Qualcomm Incorporated, San Diego, CA 92121 (US)
(72) Inventor: LAROIA, Rajiv, Basking Ridge, NJ 07920 (US); LI, Junyi, Bedminster, NJ 07058 (US); UPPALA, Sathyadev, Venkata c/o Flarion Tech. Inc., Bedminster, NJ 07921 (US)
(74) Representative: Wagner & Geyer
(86) International application number: PCT/US2002/038627
(87) International publication number: WO 2004/054289

(56) References cited:
- WO-A1-00/22873
- WO-A1-00/28763
- US-A- 5 442 803
- US-A- 5 757 788
- US-A1- 2002 163 894
- US-B1- 6 256 486
- CHUANG J C-I: "An OFDM-Based System with Dynamic Packet Assignment and Interference Suppression for Advanced Cellular Internet Service" WIRELESS PERSONAL COMMUNICATIONS, vol. 13, no. 1/02, 1 May 2000 (2000-05-01) , pages 167-183, XP000894164 SPRINGER, DORDRECHT, NL ISSN: 0929-6212 DOI: 10.1023/A:1008977908447

## Description

### Technical Field

This invention relates to wireless communications systems and, more particularly, to wireless communications between wireless terminals and base stations in a multiple access communications system.

### Background of the Invention

In a wireless multiple access communication system, the wireless traffic channel resource, e.g., bandwidth and time interval, is shared by all the wireless terminals, i.e., mobile units, in a particular cell. Efficient allocation of this traffic channel resource is very important, as it directly impacts the utilization of the traffic channel resource and the quality of service perceived by individual wireless terminal users. One such wireless communications system is the Orthogonal Frequency Division Multiplexing (OFDM) based Spread Spectrum Multiple Access system.

In a traditional wireless system, the traffic channel resource is managed by use of rate allocation. In particular, a dedicated control channel is typically established between a base station and a particular wireless terminal. The base station then allocates to the wireless terminal a traffic channel having a prescribed transmission rate through control message exchange on the dedicated control channel. Once the transmission rate allocation is completed, the wireless terminal may use the allocated traffic channel for an indefinite duration. When the traffic requirement changes, the base station and the wireless terminal change the transmission rate of the traffic channel again through control message exchange. A problem with this control message based transmission rate allocation arrangement is that in general the control message exchange can take quite a significant amount of time to complete and, consequently, the traffic channel resource allocation process may be quite inefficient. Specifically, assume that control message exchange takes time T to be completed. Suppose that a traffic channel has already been assigned to a wireless terminal. Further assume that there is some idle interval during which the assigned wireless terminal has no traffic to be transmitted. Then, it is impossible to allow another wireless terminal to utilize the traffic channel resource in the idle interval that is less than T, thereby resulting in under utilization of the traffic channel resource. In another example, assume that "low" priority traffic has been transmitted for one wireless terminal, then when "high" priority traffic arrives for another wireless terminal, the base station has to change the traffic channel resource allocation from the wireless terminal having the low priority traffic to the wireless terminal having the arriving high priority traffic. Exchanging control messages to realize the required traffic channel allocation change introduces latency in transmission and/or reception of the high priority traffic, which is extremely undesirable.

Further attention is drawn to the document US 2002/0163894 A1 which describes a technique for distributing channel allocation information in a demand access communication system. In a preferred embodiment, for use with Code Division Multiple Access (CDMA) type communication, multiple access codes are used that have a defined code repeat period or code epoch. For each such epoch duration, a central controller, such as located at a base station in the case of operating a forward link, determines a schedule of assignment of traffic channels to active terminals for each epoch. For each terminal designated as active during the epoch, an active terminal unit identifier is assigned. For each terminal designated as active during the epoch, the base station assigns a list of active channels for such terminal unit. Prior to the start of each epoch, a channel set up message is sent on one of the forward link channels, such as a paging channel. The channel set up message indicates the terminal unit identifiers and the lists of active channels for epochs of the associated traffic channel(s) that are to follow. At the remote terminal unit, upon receiving a paging channel message, an active terminal identifier is determined from each paging channel message and compared to a previously assigned terminal identifier. On a predetermined subsequent epoch, the indicated active traffic channel, as indicated from the list of active traffic channels indicated by a received paging channel message, are then processed.

Another document Chuang J C-I: "An OFDM-based system with dynamic packet assignment and interference suppression for advanced cellular Internet service", IEEE GLOBECOM 1998, vol. 2, 8 November 1998, pages 974-979, describes wireless networks which are expected to employ packet access with high peak-bandwidth demands. A dynamic packet assignment (DPA) method is proposed as a key component of the MAC protocol for an OFDM-based advanced cellular Internet service (ACIS) system, which is targeted for applications such as Web browsing, with a peak downlink transmission rate on the order of 1 Mb/s using a wide-area cellular infrastructure. This method describes the allocation of radio resources on a packet time scale and reassign them, thereby gaining advantages in both statistical multiplexing of packet access and spectrum efficiency of dynamic channel assignment (DCA). Interference suppression is considered in this paper as method for performance enhancement.

### SUMMARY OF INVENTION

In accordance with the present invention, a method as set forth in claim 1, an apparatus as set forth in claim 19, a method as set forth in claim 20, an apparatus as set forth in claim 21, a method as set forth in claim 22, and an apparatus as set forth in claim 23 are provided. Embodiments of the invention are claimed in the dependent claims.

These and other problems and limitations of prior known wireless communications system traffic channel resource allocation arrangements are overcome by managing the traffic channel resource utilizing traffic segment allocation. This is realized by partitioning the channel resource into an assignment channel and a traffic channel in a fixed manner. The assignment channel includes assignment segments and the traffic channel includes traffic segments. The traffic segment is the basic traffic channel resource unit used to transport traffic data and has a finite time interval and bandwidth. The finite time interval and bandwidth may be fixed, e.g., preselected to be a particular time interval and/or bandwidth. Each traffic segment is associated with an assignment segment in a predetermined, e.g., fixed, relationship prior to use of the traffic and assignment segments. Thus, both the basestation and wireless terminals know which traffic segments correspond to which assignment segments prior to transmission of information, e.g., a wireless terminal identifier, in a particular assignment segment. The wireless terminal identifier may correspond to an individual wireless terminal or, in the case of group messaging, a group of wireless terminals: One or more traffic segments may be associated with a particular assignment segment.

The traffic channel normally will include segments dedicated for use by different wireless terminals or groups of terminals (in the case of multicasting). While individual traffic channel segments may be dedicated for use by a single wireless terminal, or, in the case of a group broadcast, an individual group of terminals. Since the traffic channel normally includes segments dedicated to different wireless terminals, the trafic channel may be viewed as a resource which is shared or common to multiple wireless terminals.

A base station broadcasts via an assigmnent segment which wireless terminal (or group of terminals) is to use a particular traffic segment. This is realized by transmitting one or more simple wireless terminal identifiers corresponding to particular wireless terminal(s) assigned to the particular traffic segment in the assignment segment Assignments of traffic segments for receive purposes may include multiple wireless terminal identifiers or a wireless terminal identifier used to identify a group of wireless terminals. Assignments of traffic segments for transmit purposes normally include a single wireless terminal identifier corresponding to a single wireless terminal. This is to avoid possible transmission conflicts which could result from multiple terminals trying to transmit traffic data in a traffic segment at the same time.

Each active wireless terminal monitors received assignment segments to detect any traffic channel assignments. Once a wireless terminal detects a wireless terminal identifier in an assignment segment which corresponds to the wireless terminal, it proceeds to receive/transmit the traffic data in the traffic segment associated with the received assignment segment that included the terminal identifier corresponding to the wireless terminal. The association between assignment and traffic segments allows the wireless terminal to know which traffic data segment it has been allocated based on the fixed apriori relationship between the assignment segment which included its wireless terminal identifier and the corresponding traffic segment. This approach avoids the need to transmit a traffic segment identifier in an assignment segment.

Technical advantages of applicants' unique invention are that: no control message or other message exchange is required; the traffic channel resource can rapidly be assigned to different wireless terminal users based on their traffic needs and channel conditions; and resource scheduling can be realized in an extremely flexible manner.

### Brief Description of the Drawing

FIG. 1 shows, in simplified block diagram form, a wireless multiple access communications system in which the invention may be advantageously employed;
FIG. 2 is a graphical representation illustrating an assignment segment and a number of traffic segments useful in describing the invention;
FIG. 3 is a graphical representation illustrating a prescribed relationship between assignment segments and traffic segments also useful in describing the invention;
FIG. 4 is a graphical representation illustrating the allocation of traffic segments to wireless terminals also useful in describing the invention;
FIG. 5 shows, in simplified block diagram form, details of an embodiment of the invention in which segment assignment and scheduling are employed;
FIG. 6A is a flowchart illustrating steps in a base station process for allocating the downlink traffic resource in accordance with the invention;
FIG. 6B is a flowchart illustrating steps in a base station process for allocating the uplink traffic resource in accordance with the invention;
FIG. 7A is a flowchart illustrating steps in a wireless terminal process for detecting allocation of the downlink traffic resource to it in accordance with the invention; and
FIG. 7B is a flowchart illustrating steps in a wireless terminal process for detecting allocation of the uplink traffic resource to it in accordance with the invention.

### Detailed Description

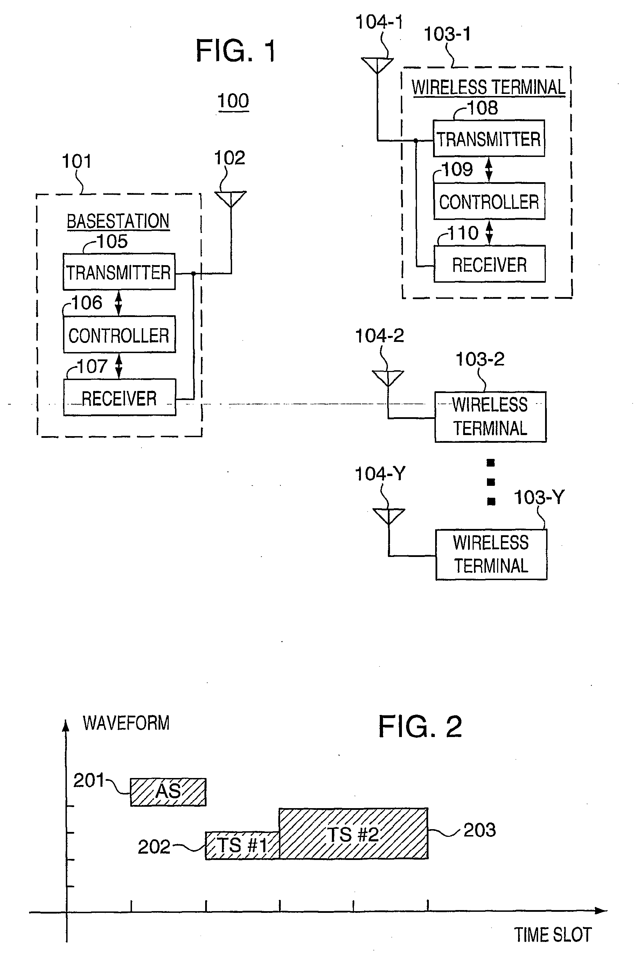

FIG. 1 shows, in simplified block diagram form, a wireless mobile multiple access communications system in which the invention may be advantageously employed. It should be noted that although applicants' unique invention will be described in the context of a wireless mobile communications system, it has equal application to non-mobile, e.g. fixed, wireless communications systems. As indicated above, one such mobile wireless communications system is OFDM based spread spectrum multiple access.

Specifically, shown in FIG. 1 is a mobile multiple access wireless communications system 100. System 100 includes base station 101 including antenna 102 and one or more remote wireless terminals, i.e., mobile units, 103-1, 103-2 through 103-Y including associated antennas 104-1, 104-2 and 104-Y, respectively. Transmission of signals is from and to base station 101 to and from remote wireless terminals 103. All of wireless terminals 103 share the transmission spectrum in a dynamic fashion. This is realized by managing the channel, i.e., bandwidth and time interval, in the form of segments and by the dynamic allocation of the traffic segments by associating traffic segments to a particular assignment segment in a prescribed manner. In particular, base station 101 dynamically broadcasts the assignment of traffic data channels to the remote wireless terminals 103 by use of a simple identifier for each of the active wireless terminals 103. Remote wireless terminals 103 monitor all assignment segments to detect whether their identifier is included in the assignment segment. After detecting its identifier, a particular remote wireless terminal 103 then receives/transmits its data segments in the assigned traffic data channel.

In this example, base station 101 includes transmitter 105, receiver 107 and controller 106 for transmitting and receiving wireless messages via antenna 102. Controller 106 is employed to control operation of transmitter 105 and receiver 107, in accordance with the invention. Similarly, in this example, each of wireless terminals 103-1 through 103-Y includes transmitter 108, receiver 110 and controller 109 for transmitting and receiving wireless messages via antenna 104. Controller 109 is employed to control operation of transmitter 108 and receiver 110, in accordance with the invention.

FIG. 2 illustrates the physical mechanism of managing the channel resource in the form of traffic segments 202 and 203 and an assignment segment 201. The wireless channel resource (bandwidth and time interval) is partitioned into an assignment channel including one or more assignment segments 201, etc., and a traffic channel including a plurality of traffic segments 202, 203, etc. Also shown are time slots. A time slot is a basic time unit and associated with it is a unique time slot index. During any particular time slot there could be a number of waveforms present that are used as the traffic channel. The waveforms may or may not be orthogonal to each other. One or more waveforms are grouped together as a waveform set. Each waveform set has a unique waveform set index. A traffic segment is defined as a combination of prescribed time slot and waveform set indices. In general, a traffic segment contains prescribed waveforms over a prescribed finite time interval.

In a given system, different traffic segments may contain time slots having time intervals of different duration and having waveform sets with different bandwidths. For example, as shown in FIG. 2, traffic segment #1 202 contains one time slot and two waveforms, while segment #2 203 contains two time slots and four wavefonns.

All the traffic data between the base station 101 and the wireless terminals 103 is conveyed on traffic segments. A traffic segment is the basic (minimum) unit of the traffic channel, resource. In a wireless system, there are downlink traffic segments and uplink traffic segments. The traffic channel resource is allocated in a form of traffic segment allocation. That is, the base station 101 assigns traffic segments to the wireless terminals 103 in the cell such that the assigned wireless terminals 103 receive traffic in the assigned downlink traffic segments or transmit traffic in the assigned uplink traffic segments.

Assignment information is also conveyed in a form of segments, called assignment segments. Assignment segments are separate from traffic segments. In a wireless system, assignment segments are always in the downlink. There are separate assignment segments associated with downlink traffic segments and uplink traffic segments, though they may be coded together in the physical layer.

The form of segment allocation employed in applicants' unique invention is fundamentally different from the prior known form of rate allocation. Specifically, in applicants' invention, the traffic channel resource is managed on a traffic segment basis rather than on a transmission rate basis. Each traffic segment has a prescribed finite time interval, thereby accommodating rapid changes in traffic requirement and wireless channel condition, and enabling efficient traffic channel resource allocation.

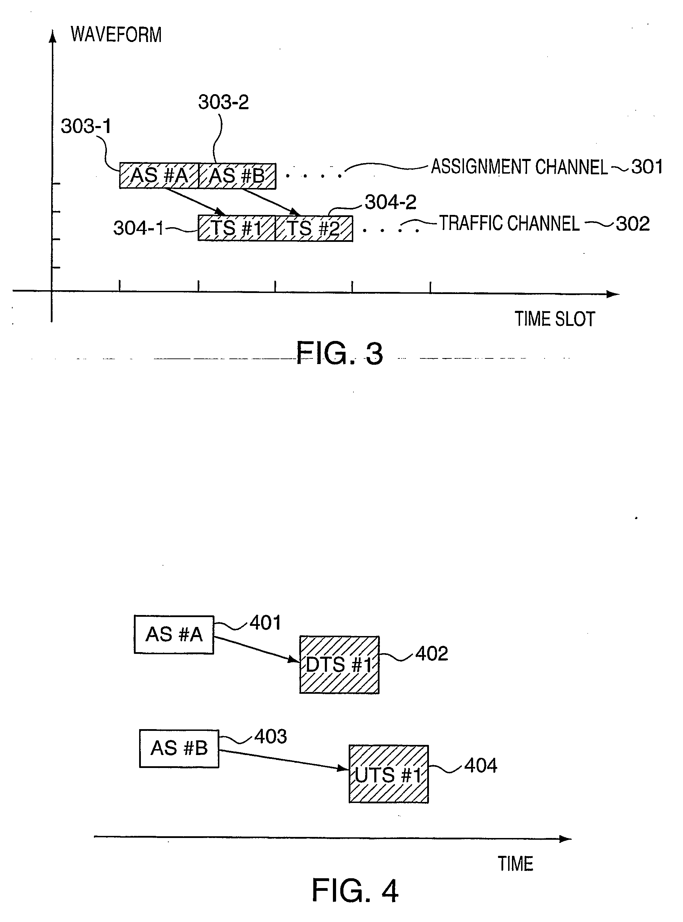

FIG. 3 illustrates the prescribed association between assignment segments and traffic segments in assignment channel 301 and traffic channel 302, respectively. Thus, as shown, the wireless channel resource (bandwidth and time interval) is partitioned into an assignment channel 301 and a traffic channel 302, among other channels. The assignment channel 301 includes assignment segments (AS) 303-1 through 303-N and the traffic channel includes traffic segments (TS) 304-1 through 304-M. The sizes, in waveforms and time slots, of different assignment segments 303 may not be the same, and the sizes, in waveforms and time slots, of different traffic segments may not be the same either. However, the partitioning of the assignment channel 301 and traffic channel 302 is fixed, and the construction of assignment segments 303 and traffic segments 304 is also determined a priori. In a preferred embodiment, each assignment segment 303 is associated with a traffic segment 304 in a prescribed one-to-one manner. In a typical situation, the assigmnent information of a traffic segment 304 is conveyed in the associated assignment segment 303. However, there could be scenarios where an assignment segment 303 conveys the assignment information for more than one traffic segment 304.

Consider a simple example of the association of traffic segment 304 and assignment segments 303. As shown in FIG. 3, each traffic segment 304 is associated with an assignment segment 303 in a prescribed manner, Specifically, downlink traffic segment #1 304-1 is associated with assignment segment #A 303-1 and downlink traffic segment #2 304-2 is associated with assignment segment #B 303-2. Note that uplink traffic segments are associated with assignment segments in a similar fashion. Since the association of a traffic segment 304 and an assignment segment 303 is determined in this prescribed manner, the assignment segment 303 does not necessarily have to contain the resource parameters of the associated traffic segment 304, i.e., the time slot and waveform set indices, thereby significantly reducing the overhead in transmitting assignment segments 303. Moreover, one or more traffic segments 304 may be associated with a single assignment segment 303. The number of traffic segments 304 that are associated with an assignment segment 303 can be either fixed or variable. It should be noted that in the former example, the fixed number of traffic segments 304 is associated with an assignment segment 303, the plurality of traffic segments 304 in effect can be represented as a single larger traffic segment 304. Thus, the association between the plurality of traffic segments 304 with the assignment segment 303 still appears like a one-to-one association. In the latter example, the assignment segment 303 has to explicitly state that number. However, once that number is given, under some a priori arrangement, the assignment segment 303 can specify all the associated traffic segments 304 without explicitly stating their resource parameters. For example, as shown in FIG. 3, traffic segment #1 304-1 is associated with assignment segment #A 303-1. Now suppose assignment segment #A 303-1 states that it includes two (2) traffic segments 304. An a priori arrangement can be such that the assignment segment #A 303-1 covers traffic segment #1 304-1 and the subsequent traffic segment, which is traffic segment #2 304-2 in this instance. In this instance, assignment segment #A 303-1 covers traffic segment #1 304-1 and traffic segment #2 304-2 and, consequently, there is no need to transmit assignment segment #B 303-2.

In general, a traffic segment 304 does not precede the associated assignment segment 303. The delay from the assignment segment 303 to the traffic segment 304 reflects the time the wireless terminal 103 takes to decode the assignment from the assignment segment 303 and to prepare to transmit or receive the traffic in the associated traffic segment 304. Therefore, in the downlink, the traffic segment 304 can be as early as the associated assignment segment 303, while in the uplink, the assignment segment 303 is generally strictly earlier than the traffic segment 304.

Further, note that the delay from a traffic segment to its associated assignment segment should be chosen to be the minimum possible delay value allowed by the implementation design. For downlink traffic segments, the preferred minimum delay value is zero, i.e., a downlink traffic segment can be as early as the associated assignment segment. For uplink traffic segments, the preferred minimum delay value is the time interval required by a wireless terminal to receive and to decode the assignment segment and to prepare and to encode the traffic data to be transmitted in the assigned uplink traffic segment, which is limited by the mobile processing capability.

An important aspect of the invention is that there is no need to expressly include the wireless terminal identifier in the traffic segments.

FIG. 4 is a graphical representation illustrating the allocation of traffic segments to wireless terminals also useful in describing the invention. The essential information to be contained in an assignment segment is the identifier of the wireless terminal 103 to be utilizing the associated traffic segment. In the downlink, the user identifier indicates which user is to receive traffic from the associated traffic segment. In the uplink the user identifier indicates which user is allowed to transmit traffic with the associated traffic segment. Additionally, by including in the assignment segment some physical layer parameters such as coding rate and bits-per-symbol to be used in the associated traffic segment, the system allows those physical layer parameters to be rapidly changed on a segment by segment basis. Such change may be necessary to accommodate variations of wireless channel conditions, traffic requirements and other scheduling considerations. It will be apparent to those skilled in the art that the actual coding rate or bits-per-symbol indication does not have to be expressly transmitted, and that some predetermined convention may be employed using representations of the physical parameters to be communicated.

FIG. 4 shows that the logical flow of assigning traffic segments. The base station 101 transmits the assignment segments in the downlink. All the active wireless terminals 103 monitor all the assignment segments to see whether their user identifiers appear in the assignment segments. As shown in FIG. 4, wireless terminal 103-1 sees its identifier 401 in the assignment segment for downlink traffic segment (DTS) #1 402, and thus receives traffic in the assigned downlink traffic segment #1 402. Meanwhile, wireless terminal 103-2 sees its identifier 403 in the assignment segment for uplink traffic segment (UTS) #1 403, and thus transmits traffic in the assigned uplink traffic segment #1 404.

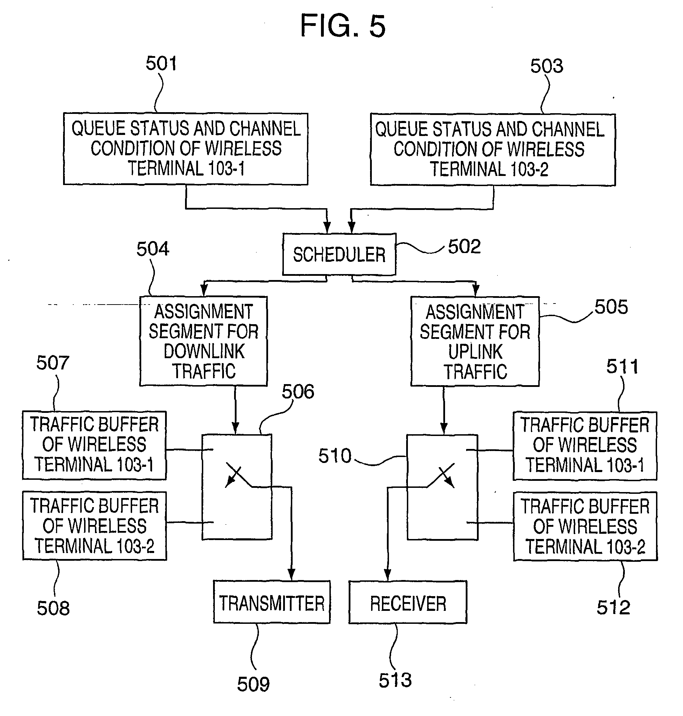

FIG. 5 shows, in simplified block diagram form, details of an embodiment of the invention in which segment assignment and scheduling are employed. The segment allocation shown in FIG. 4 allows efficient traffic channel resource allocation, improves spectral utilization, and facilitates flexible traffic scheduling. FIG. 5 shows a simplified implementation of combining traffic segment assignment and scheduling.

The base station 101 maintains a table of traffic queue status, and wireless channel condition if possible, for individual wireless terminals 103. In this example, base station 101 maintains queue status and channel condition 501 for wireless terminal 103-1 and queue status and channel condition 503 for wireless terminal 103-2. The base station scheduler 502 periodically checks the queue tables 501 and 503 and determines the traffic segment assignment based on some prescribed scheduling policy. The assignment is then broadcast in associated assignment segments via 504 for downlink traffic and via 505 for uplink traffic. Downlink traffic for the assigned wireless terminal 103, i.e., wireless terminal 103-1 or wireless terminal 103-2, is then transmitted via transmitter 509 with the associated traffic segment by the base station 101, while uplink traffic is received via receiver 513 at the base station 101 with the associated traffic segment from the assigned wireless terminal 103, i.e., wireless terminal 103-1 or wireless terminal 103-2. The downlink transmission is effected by controllable switching unit 506 being controlled to select the data for transmission from either a traffic buffer 507 for wireless terminal 103-1 or traffic buffer 508 for wireless terminal 103-2. Similarly, received data is controllable supplied from receiver 513 via controllable switch 510 either to traffic buffer 511 for wireless terminal 103-1 or traffic buffer 512 for wireless terminal 103-2.

Spectral utilization of the traffic channel resource is improved by combining segment assignment and scheduling. For example, in an idle interval during which no traffic needs to be transmitted for one wireless terminal 103, the base station scheduler 502 simply puts the identifier of another wireless terminal 103 in the assignment segment so that that wireless terminal 103 can utilize the channel resource in the idle interval. Another example is that when high priority traffic arrives, the base station 101 simply puts the identifier of the high priority wireless terminal 103 in the assignment segment, thereby changing the resource allocation without introducing significant latency. Similarly, when the base station 101 determines that wireless terminal 103-1's channel condition becomes better than wireless terminal 103-2's, the base station 101 can simply switch the segment allocation from wireless terminal 103-2 to wireless terminal 103-1 by putting wireless terminal 103-1's identifier instead of wireless terminal 103-2's identifier in the assignment segments.

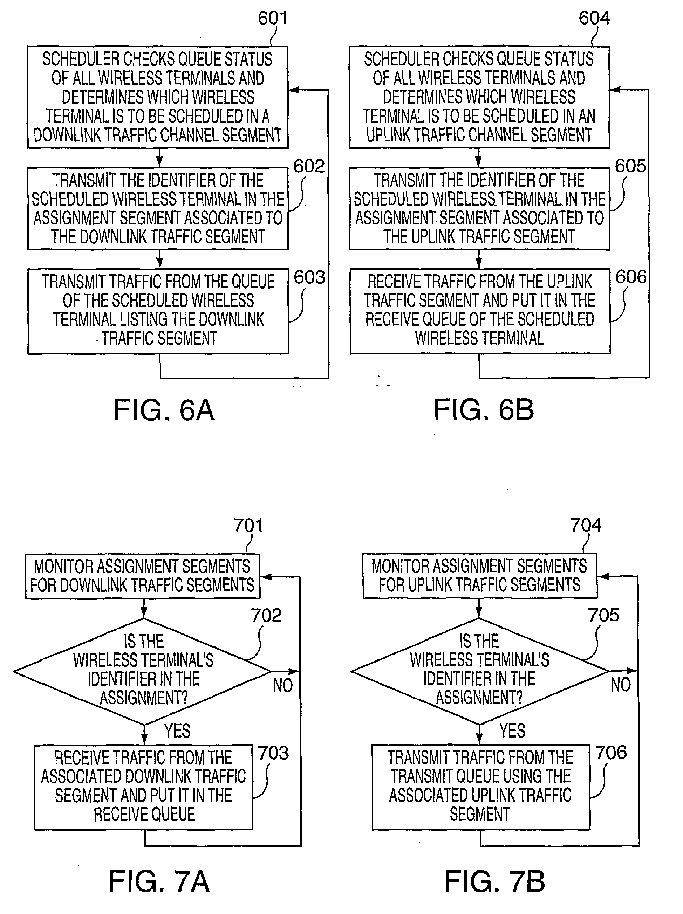

FIG. 6A is a flowchart illustrating steps in a base station process for allocating the downlink traffic resource in accordance with the invention. Thus, in step 601 base station scheduler 502 checks the queue status of all wireless terminals 103 and determines which wireless terminal 103 is to be scheduled in a downlink traffic segment. Then, step 602 causes the transmission of the scheduled wireless terminal 103 identifier in an assignment segment associated with the downlink traffic segment. Thereafter, in step 603, traffic from the transmit queue, i.e., transmit traffic buffer, of the scheduled wireless terminal 103 is transmitted via transmitter 509 using the associated downlink traffic segment. Then, steps 601, 602 and 603 are iterated.

FIG. 6B is a flowchart illustrating steps in a base station process for allocating the uplink traffic resource in accordance with the invention. Thus, in step 604 base station scheduler 502 checks the queue status of all wireless terminals 103 and determines which wireless terminal 103 is to be scheduled in an uplink traffic segment. Then, step 605 causes the transmission of the scheduled wireless terminal 103 identifier in an assignment segment associated with the uplink traffic segment. Thereafter, in step 606, traffic received from receiver 513 in the associated uplink traffic segment is put in the receive queue, i.e., receive traffic buffer, of the scheduled wireless terminal 103. Then, steps 604, 605 and 606 are iterated.

FIG. 7A is a flowchart illustrating steps in a wireless terminal process for detecting allocation of the downlink traffic resource to it in accordance with the invention. In step 701 all the active wireless terminals 103 monitor all of the assignment segments for an assignment of downlink traffic segments. Then, step 702 tests to determine if the wireless terminal's identifier is in the assignment associated with the detected downlink traffic segments. If the test result in step 702 is NO, control is returned to step 701 and steps 701 and 702 are repeated until step 702 yields a YES result. This YES result in step 702 indicates that the wireless terminal's identifier has been detected in the assignment. Then, step 703 causes traffic received in the associated downlink traffic segment to be placed in the receive queue for the assigned wireless terminal 103. Thereafter, steps 701, 702 and 703 are repeated.

FIG. 7B is a flowchart illustrating steps in a wireless terminal process for detecting allocation of the uplink traffic resource to it in accordance with the invention. In step 704 all the active wireless terminals 103 monitor all of the assignment segments for an assignment of uplink traffic segments. Then, step 705 tests to determine if the wireless terminal's identifier is in the assignment associated with the detected uplink traffic segments. If the test result in step 705 is NO, control is returned to step 704 and steps 704 and 705 are repeated until step 705 yields a YES result. This YES result in step 705 indicates that the wireless terminal's identifier has been detected in the assignment. Then, step 706 causes traffic to be selected from the assigned wireless terminal's transmit queue to be transmitted in the associated uplink traffic segment. Thereafter, steps 704, 705 and 706 are repeated.

The above-described embodiments are, of course, merely illustrative of the principles of the invention. Indeed, numerous other methods or apparatus may be devised by those skilled in the art without departing from the scope of the invention. Moreover, the invention may be implemented as hardware, as an integrated circuit, via programming on a microprocessor, on a digital signal processor or the like.

## Claims

1. A method for use in a wireless multiple access communications system (100) comprising at least one base station (101) and a plurality of wireless terminals (103-1, 103-2,..., 103-Y) to allocate a traffic channel resource to one or more of said wireless terminals (103-1, 103-2,..., 103-Y) comprising the steps of :
associating each segment of an assignment channel (201) with at least one segment of a traffic channel (202, 203) to thereby establish a correspondence between each assignment channel segment (201) and at least one traffic channel segment (202, 203); and
transmitting a wireless terminal identifier (401) in a first one of said assignment channel segments (201), said wireless terminal identifier (401) corresponding to a wireless terminal (103-1, 103-2,..., 103-Y) to which the traffic channel segment (202, 203), corresponding to said first assignment channel segment (201), has been dedicated, wherein a segment defines a finite time interval and bandwidth.

2. The method as defined in claim 1, wherein said wireless terminal identifier (401) corresponds to a single wireless terminal.

3. The method of claim 1, wherein said wireless terminal identifier (401) corresponds to a group of wireless terminals (103-1, 103-2,..., 103-Y) to which said traffic channel segment (202, 203), corresponding to said first assignment channel segment (201), has been dedicated for use as a downlink by said group of wireless terminals (103-1, 103-2,..., 103-Y).

4. The method as defined in claim 1,
wherein said assignment channel (301) is common to all active ones of said plurality of wireless terminals (103-1, 103-2,..., 103-Y); and
wherein said traffic segments (202, 203) are employed to transport traffic data.

5. The method as defined in claim 4, wherein each of said traffic segments (202, 203) has a fixed finite time interval and bandwidth.

6. The method as defined in claim 4 wherein each of said assignment segments (201) has a fixed finite time interval and bandwidth.

7. The method as defined in claim 1 wherein said step of transmitting includes a step of transmitting prescribed physical layer parameters in prescribed ones of said one or more assignment segments (201).

8. The method as defined in claim 7 wherein said physical layer parameters include representations of the associated traffic data coding rate and bits-per-symbol to be employed in said associated traffic segment (202, 203).

9. The method as defined in claim 1 further including the step of scheduling the assignment of said traffic segments (202, 203) in accordance with a prescribed scheduling policy.

10. The method as defined in claim 9 wherein said step of scheduling includes the steps of checking status of all active wireless terminals (103-1, 103-2,..., 103-Y), in response to said status check, determining which one of said active wireless terminals (103-1, 103-2,..., 103-Y) is to receive traffic data in a downlink traffic segment (202, 203), transmitting the identifier (401) of the scheduled wireless terminal (103-1, 103-2,..., 103-Y) in an assignment segment (201) associated with said downlink traffic segment (202, 203) and transmitting traffic data for said scheduled wireless terminal (103-1, 103-2,..., 103-Y) in said downlink traffic segment (202, 203).

11. The method as defined in claim 10 wherein the status being checked includes traffic priority, traffic queue status and physical channel condition.

12. The method as defined in claim 9 wherein said step of scheduling includes the steps of checking status of all active wireless terminals (103-1, 103-2,..., 103-Y), in response to said status check, determining which one of said active wireless terminals (103-1, 103-2,..., 103-Y) is to transmit traffic data in an uplink traffic segment (202, 203), transmitting the identifier (401) of the scheduled wireless terminal (103-1, 103-2,..., 103-Y) in an assignment segment (201) associated with said uplink traffic segment (202, 203) and receiving traffic data from said scheduled wireless terminal (103-1, 103-2,..., 103-Y) in said uplink traffic segment (202, 203).

13. The method as defined in claim 12 wherein the status being checked includes traffic priority, traffic queue status and physical channel condition.

14. The method as defined in claim 1 including a step of detecting allocation of a downlink traffic resource to the wireless terminal (103-1, 103-2, ..., 103-Y).

15. The method as defined in claim 14 wherein said step of detecting includes the steps of monitoring received assignment segments (201) for assignments of downlink traffic segments (202, 203), determining whether said wireless terminal's identifier (401) is included in any detected assignment segments (201) and in response to a determination that said wireless terminal's identifier (401) is in a detected assignment segment (201), receiving traffic data from said downlink traffic segment (202, 203) associated with the assignment segment (201) including the wireless terminal's identifier (401).

16. The method as defined in claim 1 including a step of detecting allocation of an uplink traffic resource to the wireless terminal (103-1, 103-2, ..., 103-Y).

17. The method as defined in claim 16 wherein said step of detecting includes the steps of monitoring received assignment segments (201) for assignments of uplink traffic segments (202, 203), determining whether said wireless terminal's identifier (401) is included in any detected assignment segments (201) and in response to a determination that said wireless terminal's identifier (401) is in a detected assignment segment (201), transmitting traffic data from said wireless terminal (103-1, 103-2, ..., 103-Y) in said uplink traffic segment (202, 203) associated with said assignment segment (201) including said wireless terminal's identifier (401).

18. The method as defined in claim 1 further comprising the step of:
transmitting a specific wireless terminal identifier (401) in an assignment segment (201) of an assignment channel (301) of said traffic channel resource, said assignment segment (201) being associated in a prescribed fixed manner with a traffic segment (202, 203) of a traffic channel (302) of said traffic channel resource destined for said specific wireless terminal (103-1, 103-2, ..., 103-Y).

19. Apparatus for use in a wireless terminal (103-1, 103-2, ..., 103-Y) in a wireless multiple access communications system (100) to detect allocation of a downlink traffic resource to the wireless terminal (103-1, 103-2, ..., 103-Y) comprising:
means for monitoring received assignment segments (201) of an assignment channel for assignments of downlink traffic segments (202, 203), wherein each assignment segment is associated with at least one segment of a traffic channel to thereby establish a correspondence between each assignment segment and at least one traffic channel segment;
means for determining whether said wireless terminal's identifier (401) is included in any detected assignment segments (201); and
means responsive to a determination that said wireless terminal's identifier (401) is in a detected assignment segment (201) for receiving traffic data from said downlink traffic segment (202, 203) associated with the assignment segment (201) including the wireless terminal's identifier (401), wherein a segment defines a finite time interval and bandwidth.

20. A method for use in a wireless terminal (103-1, 103-2, ..., 103-Y) in a wireless multiple access communications system (100) to detect allocation of a downlink traffic resource to the wireless terminal (103-1, 103-2, ..., 103-Y) comprising the steps of:
monitoring received assignment segments (201) of an assignment channel for assignments of downlink traffic segments (202, 203), wherein each assignment segment is associated with at least one segment of a traffic channel to thereby establish a correspondence between each assignment segment and at least one traffic channel segment;
determining whether said wireless terminal's identifier (401) is included in any detected assignment segments (201); and
in response to a determination that said wireless terminal's identifier (401) is in a detected assignment segment (201), receiving traffic data from said downlink traffic segment (202, 203) associated with the assignment segment (201) including the wireless terminal's identifier (401), wherein a segment defines a finite time interval and bandwidth.

21. Apparatus for use in a wireless terminal (103-1, 103-2, ..., 103-Y) in a wireless multiple access communications system (100) to detect allocation of an uplink traffic resource to the wireless terminal (103-1, 103-2, ..., 103-Y) comprising:
means for monitoring received assignment segments (201) of an assignment channel for assignments of uplink traffic segments (202, 203), wherein each assignment segment is associated with at least one segment of a traffic channel to thereby establish a correspondence between each assignment segment and at least one traffic channel segment;
means for determining whether said wireless terminal's identifier (401) is included in any detected assignment segments (201); and
means responsive to a determination that said wireless terminal's identifier (401) is in a detected assignment segment (201) for transmitting traffic data in said uplink traffic segment (202, 203) associated with the assignment segment (201) including the wireless terminal's identifier (401), wherein a segment defines a finite time interval and bandwidth.

22. A method for use in a wireless terminal (103-1, 103-2, ..., 103-Y) in a wireless multiple access communications system (100) to detect allocation of an uplink traffic resource to the wireless terminal (103-1, 103-2, ..., 103-Y) comprising the steps of:
monitoring received assignment segments (201) of an assignment channel for assignments of uplink traffic segments (202, 203), wherein each assignment segment is associated with at least one segment of a traffic channel to thereby establish a correspondence between each assignment segment and at least one traffic channel segment;
determining whether said wireless terminal's identifier (401) is included in any detected assignment segments (201); and
in response to a determination that said wireless terminal's identifier (401) is in a detected assignment segment (201), transmitting traffic data in said uplink traffic segment (202, 203) associated with the assignment segment (201) including the wireless terminal's identifier (401), wherein a segment defines a finite time interval and bandwidth.

23. Apparatus for use in a wireless multiple access communications system (100) comprising at least one base station (101) and a plurality of wireless terminals (103-1, 103-2, ..., 103-Y) and including a wireless channel resource to allocate a traffic channel resource to one or more of said wireless terminals (103-1, 103-2, ..., 103-Y) comprising:
means for supplying identifiers (401) specific to active ones of said plurality of wireless terminals (103-1, 103-2, ..., 103-Y); and
means for transmitting a specific one of said wireless terminal identifiers (401) in an assignment segment (201) of an assignment channel (301) of said traffic channel resource, said assignment segment (201) being associated in a prescribed fixed manner with a traffic segment (202, 203) of a traffic channel (302) of said traffic channel resource destined for said specific wireless terminal (103-1, 103-2, ..., 103-Y);
wherein the assignment channel comprises a plurality of assignment segments and each assignment segment is associated with at least one traffic segment of the traffic channel to thereby establish a correspondence between each assignment segment and at least one traffic channel segment; and
wherein a segment defines a finite time interval and bandwidth.

24. The apparatus as defined in claim 23 further including means for partitioning said wireless channel resource into at least an assignment channel (301) including one or more assignment segments (201) and a traffic channel (302) including a plurality of traffic segments (202, 203), and for associating each of said assignments segments (201) with said traffic segments (202, 203) in a prescribed manner wherein said assignment channel (301) is common to all active ones of said plurality of wireless terminals (103-1, 103-2, ..., 103-Y).

25. The apparatus as defined in claim 23 further including means for scheduling the assignment said traffic segments (202, 203) in accordance with a prescribed scheduling policy.

26. The apparatus as defined in claim 23 further including means for detecting allocation of a downlink traffic resource to the wireless terminal (103-1, 103-2, ..., 103-Y).

27. The apparatus as defined in claim 26 wherein said means for detecting includes means for monitoring received assignment segments (201) for assignments of downlink traffic segments (202, 203), means for determining whether said wireless terminal's identifier (401) is included in any detected assignment segments (201), and means responsive to a determination that said wireless terminal's identifier (401) is in a detected assignment segment (201) for receiving traffic data from said downlink traffic segment (202, 203) associated with the assignment segment (201) including the wireless terminal's identifier (401).

28. The apparatus as defined in claim 23 including means for detecting allocation of an uplink traffic resource to the wireless terminal (103-1, 103-2, ..., 103-Y).

29. The apparatus as defined in claim 28 wherein said means for detecting includes means for monitoring received assignment segments (201) for assignments of uplink traffic segments (202, 203), means for determining whether said wireless terminal's identifier (401) is included in any detected assignment segments (201), and means responsive to a determination that said wireless terminal's identifier (401) is in a detected assignment segment (201) for transmitting traffic data from said wireless terminal (103-1, 103-2, ..., 103-Y) in said uplink traffic segment (202, 203) associated with said assignment segment (201) including said wireless terminal's identifier (401).

30. The apparatus as defined in claim 23 further comprising:
means for partitioning said wireless channel resource into at least an assignment channel (301) including one or more assignment segments (201) and a traffic channel (302) including a plurality of traffic segments (202, 203), and for associating each of said assignments segments (201) with said traffic segments (202, 203) in a prescribed manner; and
wherein the means for transmitting is a transmitter (108).

31. The apparatus as defined in claim 30 wherein said assignment channel (301) is common to all active ones of said plurality of wireless terminals (103-1, 103-2, ..., 103-Y).

32. The apparatus as defined in claim 31 wherein said partitioning of said wireless channel resource into said assignment channel (301) and said traffic channel (302) is in a fixed manner.

33. The apparatus as defined in claim 32 wherein said traffic segments (202, 203) are employed to transport traffic data.

34. The apparatus as defined in said 33 wherein each of said traffic segments (202, 203) has a prescribed finite time interval and bandwidth.

35. The apparatus as defined in claim 33 wherein each of said assignment segments (201) has a prescribed finite time interval and bandwidth.

36. The apparatus as defined in claim 30 wherein said transmitter (108) further transmits prescribed physical layer parameters in prescribed ones of said one or more assignment segments (201).

37. The apparatus as defined in claim 36 wherein said physical layer parameters include representations of the associated traffic data coding rate and bits-per-symbol to be employed in said associated traffic segment (202, 203).

38. The apparatus as defined in claim 30 further including a scheduler (502) for scheduling the assignment said traffic segments (202, 203) in accordance with a prescribed scheduling policy.

39. The apparatus as defined in claim 38 wherein said scheduler (502) checks status of all active wireless terminals (103-1, 103-2, ..., 103-Y), makes a determination as to which one of said active wireless terminals (103-1, 103-2, ..., 103-Y) is to receive traffic data in a downlink traffic segment (202, 203), and wherein said transmitter (108) transmits the identifier of the scheduled wireless terminal (103-1, 103-2, ..., 103-Y) in an assignment segment (201) associated with said downlink traffic segment (202, 203) and transmits traffic data for said scheduled wireless terminal in said downlink traffic segment (202, 203).

40. The apparatus as defined in claim 39 wherein the status being checked includes traffic priority, traffic queue status and physical channel condition.

41. The apparatus as defined in claim 38 wherein said scheduler (502) checks status of all active wireless terminals (103-1, 103-2, ..., 103-Y), makes a determination as to which one of said active wireless terminals (103-1, 103-2, ..., 103-Y) is to transmit traffic data in an uplink traffic segment (202, 203), and further including a receiver (110) for receiving traffic data from said scheduled wireless terminal in said uplink traffic segment (202, 203).

42. The apparatus as defined in claim 41 wherein the status being checked includes traffic priority, traffic queue status and physical channel condition.

43. The apparatus as defined in claim 30 further including a detector for detecting allocation of a downlink traffic resource to the wireless terminal (103-1, 103-2, ..., 103-Y).

44. The apparatus as defined in claim 43 wherein said detector includes a monitor for monitoring received assignment segments (201) for assignments of downlink traffic segments (202, 203) and for determining whether said wireless terminal's identifier (401) is included in any detected assignment segments (201), and a receiver (110) responsive to a determination that said wireless terminal's identifier (401) is in a detected assignment segment (201) for receiving traffic data from said downlink traffic segment (202, 203) associated with the assignment segment (201) including the wireless terminal's identifier (401).

45. The apparatus as defined in claim 30 including a detector for detecting allocation of an uplink traffic resource to the wireless terminal (103-1, 103-2, ..., 103-Y).

46. The apparatus as defined in claim 45 wherein said detector includes a monitor for monitoring received assignment segments (201) for assignments of uplink traffic segments (202, 203) and for determining whether said wireless terminal's identifier (401) is included in any detected assignment segments (201), and a transmitter (108) responsive to a determination that said wireless terminal's identifier (401) is in a detected assignment segment (201) for transmitting traffic data from said wireless terminal (103-1, 103-2, ..., 103-Y) in said uplink traffic segment (202, 203) associated with said assignment segment (201) including said wireless terminal's identifier (401).

## Patentansprüche

1. Ein Verfahren zur Verwendung in einem Drahtlosmehrfachzugriffskommunikationssystem (100), das wenigstens eine Basisstation (101) und eine Vielzahl von Drahtlosterminals bzw. Drahtlosendgeräten (103-1, 103-2, ..., 103-Y) aufweist, zum Zuteilen einer Verkehrskanalressource an eines oder mehrere der Drahtlosendgeräte (103-1, 103-2, ..., 103-Y), das die folgenden Schritte aufweist:
Assoziieren jedes Segments eines Zuweisungskanals (201) mit wenigstens einem Segment eines Verkehrskanals (202, 203), um dadurch eine Übereinstimmung bzw. Entsprechung zwischen jedem Zuweisungskanalsegment (201) und dem wenigstens einen Verkehrskanalsegment (202, 203) hetzustellen; und
Senden bzw. Übertragen eines Drahtlosendgerätidentifikationselementes (401) in einem ersten der Zuweisungskanalsegmente (201), wobei das Drahtlosendgerätidentifikationselement (401) einem Drahtlosendgerät (103-1, 103-2, ..., 103-Y) entspricht, dem das Verkehrskanalsegment (202, 203), das dem ersten Zuweisungskanalsegment (201) entspricht, worden ist, wobei ein Segment ein endliches Zeitintervall und eine Bandbreite definiert.

2. Verfahren nach Anspruch 1, wobei das Drahtlosendgerätidentifikationselement (401) einem einzelnen Drahtlosendgerät entspricht.

3. Verfahren nach Anspruch 1, wobei das Drahtlosendgerätidentifikationselement (401) einer Gruppe von Drahtlosendgeräten (103-1, 103-2, ... , 103-Y) entspricht, denen das Verkehrskanalsegment (202, 203), das dem ersten Zuweisungskanalsegment (201) entspricht, zugeordnet wurde, und zwar zur Verwendung als eine Abwärtsverbindung bzw. ein Downlink durch die Gruppe von Drahtlosendgeräten (103-1, 103-2, ..., 103-Y).

4. Verfahren nach Anspruch 1,
wobei der Zuweisungskanal (301) für alle aktiven Drahtlosendgeräte der Vielzahl von Drahtlosendgeräten (103-1, 103-2, ..., 103-Y) gemeinsam vorliegt; und
wobei die Verkehrssegmente (202, 203) eingesetzt werden, um Verkehrsdaten zu transportieren.

5. Verfahren nach Anspruch 4, wobei jedes der Verkehrssegmente (202, 203) ein festgelegtes endliches Zeitintervall und eine festgelegte Bandbreite hat.

6. Verfahren nach Anspruch 4, wobei jedes der Zuweisungssegmente (201) ein festgelegtes endliches Zeitintervall und eine festgelegte Bandbreite hat.

7. Verfahren nach Anspruch 1, wobei der Schritt des Sendens bzw. Übertragens einen Schritt des Sendens bzw. Übertragens von vorgegebenen Parametern der physikalischen Schicht in vorgegebenen Zuweisungssegmenten der einen oder mehreren Zuweisungssegmente (201) beinhaltet.

8. Verfahren nach Anspruch 7, wobei die Parameter der physikalischen Schicht Darstellungen der assoziierten Verkehrsdatencodierrate und Bits-pro-Symbol beinhalten, die in dem assoziierten Verkehrssegment (202, 203) eingesetzt werden sollen.

9. Verfahren nach Anspruch 1, das weiter den Schritt des Einteilens bzw. Planens der Zuweisung der Verkehrssegmente (202, 203) gemäß einer vorgegebenen Einteilungsvorschrift aufweist.

10. Verfahren nach Anspruch 9, wobei der Schritt des Einteilens die folgenden Schritte aufweist: Überprüfen des Status von allen aktiven Drahtlosendgeräten (103-1, 103-2, ..., 103-Y), ansprechend auf die Statusüberprüfung, Bestimmen welches der aktiven Drahtlosendgeräte (103-1, 103-2, ..., 103-Y) Verkehrsdaten in einem Abwärtsverbindungsverkehrssegment (202, 203) empfangen soll, Senden bzw. Übertragen des Identifikationselementes (401) des eingeteilten Drahtlosendgeräts (103-1, 103-2, ..., 103-Y) in einem Zuweisungssegment (201), das mit dem Abwärtsverbindungsverkehrssegment (202, 203) assoziiert ist und Senden bzw. Übertragen von Verkehrsdaten für das eingeteilte Drahtlosendgerät (103-1, 103-2, ..., 103-Y) in dem Abwärtsverbindungsverkehrssegment (202, 203).

11. Verfahren nach Anspruch 10, wobei der Status, der überprüft wird, Verkehrspriorität, Verkehrswarteschlangenstatus und einen Zustand des physikalischen Kanals beinhaltet.

12. Verfahren nach Anspruch 9, wobei der Schritt des Einteilens die folgenden Schritte aufweist: Überprüfen des Status von allen aktiven Drahtlosendgeräten (103-1, 103-2, ..., 103-Y), ansprechend auf die Statusüberprüfung, Bestimmen welches der aktiven Drahtlosendgeräte (103-1, 103-2, ..., 103-Y) Verkehrsdaten in einem Aufwärtsverbindungsverkehrssegment (202, 203) senden bzw. übertragen soll, Senden bzw. Übertragen des Identifikationselementes (401) des eingeteilten Drahtlosendgeräts (103-1, 103-2, ..., 103-Y) in einem Zuweisungssegment (201), das mit dem Aufwärtsverbindungsverkehrssegment (202, 203) assoziiert ist, und Empfangen von Verkehrsdaten von dem eingeteilten Drahtlosendgerät (103-1, 103-2, ..., 103-Y) in dem Aufwärtsverbindungsverkehrssegment (202, 203).

13. Verfahren nach Anspruch 12, wobei der Status, der überprüft wird, Verkehrspriorität, Verkehrswarteschlangenstatus und einen Zustand des physikalischen Kanals beinhaltet.

14. Verfahren nach Anspruch 1, das einen Schritt des Detektierens einer Zuteilung einer Abwärtsverbindungsverkehrsressource zu dem Drahtlosendgerät (103-1, 103-2, ..., 103-Y) beinhaltet.

15. Verfahren nach Anspruch 14, wobei der Schritt des Detektierens folgende Schritte beinhaltet: Überwachen von empfangenen Zuweisungssegmenten (201) auf Zuweisungen von Abwärtsverbindungsverkehrssegmenten (202, 203) hin, Bestimmen, ob das Identifikationselement (401) des Drahtlosendgeräts in irgendwelchen detektierten Zuweisungssegmenten (201) enthalten ist und ansprechend auf eine Bestimmung, dass das Identifikationselement (401) des Drahtlosendgeräts in einem detektierten Zuweisungssegment (201) vorliegt, Empfangen von Verkehrsdaten von dem Abwärtsverbindungsverkehrssegment (202, 203), das mit dem Zuweisungssegment (201) assoziiert ist, das das Identifikationselement (401) des Drahtlosendgeräts beinhaltet.

16. Verfahren nach Anspruch 1, das einen Schritt des Detektierens einer Zuteilung einer Aufwärtsverbindungsverkehrsressource an das Drahtlosendgerät (103-1, 103-2, ..., 103-Y) beinhaltet.

17. Verfahren nach Anspruch 16, wobei der Schritt des Detektierens folgende Schritte beinhaltet: Überwachen von empfangenen Zuweisungssegmenten (201) für Zuweisungen von Aufwärtsverbindungsverkehrssegmenten (202, 203), Bestimmen, ob das Identifikationselement (401) des Drahtlosendgeräts in irgendwelchen detektierten Zuweisungssegmenten (201) enthalten ist und ansprechend auf eine Bestimmung, dass das Identifikationselement (401) des Drahtlosendgeräts in einem detektierten Zuweisungssegment (201) vorliegt, Senden von Verkehrsdaten von dem Drahtlosendgerät (103-1, 103-2, ..., 103-Y) in einem Aufwärtsverbindungsverkehrssegment (202, 203), das mit dem Zuweisungssegment (201) assoziiert ist, das das Identifikationselement (401) des Drahtlosendgeräts beinhaltet.

18. Verfahren nach Anspruch 1, das weiter den folgenden Schritt aufweist:
Senden eines spezifischen Drahtlosendgerätidentifikationselementes (401) in einem Zuweisungssegment (201) eines Zuweisungskanals (301) einer Verkehrskanalressource, wobei das Zuweisungssegment (201) auf eine vorgegebene festgelegte Weise mit einem Verkehrssegment (202, 203) eines Verkehrskanals (302) der Verkehrskanalressource assoziiert ist, die für das spezifische Drahtlosendgerät (103-1, 103-2, ..., 103-Y) bestimmt bzw. vorgesehen ist.

19. Vorrichtung zur Verwendung in einem Drahtlosendgerät (103-1, 103-2, ..., 103-Y) in einem Drahtlosmehrfachzugriffskommunikationssystem (100) zum Detektieren einer Zuteilung einer Abwärtsverbindungs- bzw. Downlink-Verkehrsressource an ein Drahtlosendgerät (103-1, 103-2, ..., 103-Y), die Folgendes aufweist:
Mittel zum Überwachen von empfangenen Zuweisungssegmenten (201) eines Zuweisungskanals für Zuweisungen von Abwärtsverbindungsverkehrssegmenten (202, 203), wobei jedes Zuweisungssegment mit wenigstens einem Segment eines Verkehrskanals assoziiert ist, um dadurch eine Übereinstimmung bzw. Entsprechung zwischen jedem Zuweisungssegment und wenigstens einem Verkehrskanalsegment herzustellen;
Mittel zum Bestimmen, ob das Identifikationselement (401) des Drahtlosendgeräts in irgendwelchen detektierten Zuweisungssegmenten (201) enthalten ist; und
Mittel, die auf eine Bestimmung, dass das Identifikationselement (401) des Drahtlosendgeräts in einem detektierten Zuweisungssegment (201) vorliegt, ansprechen, zum Empfangen von Verkehrsdaten von dem Abwärtsverbindungsverkehrssegment (202, 203), das mit dem Zuweisungssegment (201) assoziiert ist, das das Identifikationselement (401) des Drahtlosendgeräts beinhaltet, wobei ein Segment ein endliches Zeitintervall und eine Bandbreite definiert.

20. Ein Verfahren zur Verwendung in einem Drahtlosendgerät (103-1, 103-2, ..., 103-Y) in einem Drahtlosmehrfachzugriffskommunikationssystem (100) zum Detektieren einer Zuteilung einer Abwärtsverbindungsverkehrsressource an ein Drahtlosendgerät (103-1, 103-2, ..., 103-Y), das die folgenden Schritte aufweist:
Überwachen von empfangenen Zuweisungssegmenten (201) eines Zuweisungskanals für Zuweisungen von Abwärtsverbindungsverkehrssegmenten (202, 203), wobei jedes Zuweisungssegment mit wenigstens einem Segment eines Verkehrskanals assoziiert ist, um dadurch eine Übereinstimmung bzw. Entsprechung zwischen jedem Zuweisungssegment und wenigstens einem Verkehrskanalsegment herzustellen;
Bestimmen, ob das Identifikationselement (401) des Drahtlosendgeräts in irgendwelchen detektierten Zuweisungssegmenten (201) enthalten ist; und
ansprechend auf eine Bestimmung, dass das Identifikationselement (401) des Drahtlosendgeräts in einem detektierten Zuweisungssegment (201) vorliegt, Empfangen von Verkehrsdaten von dem Abwärtsverbindungsverkehrssegment (202, 203), das mit dem Zuweisungssegment (201) assoziiert ist, das das Identifikationselement (401) des Drahtlosendgeräts beinhaltet, wobei ein Segment ein endliches Zeitintervall und eine Bandbreite definiert.

21. Vorrichtung zur Verwendung in einem Drahtlosendgerät (103-1, 103-2, ..., 103-Y) in einem Mehrfachzugriffskommunikationssystem (100) zum Detektieren einer Zuteilung einer Aufwärtsverbindungs- bzw. Uplink-Verkehrsressource an ein Drahtlosendgerät (103-1, 103-2, ..., 103-Y), die Folgendes aufweist:
Mittel zum Überwachen von empfangenen Zuweisungssegmenten (201) eines Zuweisungskanals für Zuweisungen von Aufwärtsverbindungsverkehrssegmenten (202, 203), wobei jedes Zuweisungssegment mit wenigstens einem Segment eines Verkehrskanals assoziiert ist, um dadurch eine Übereinstimmung bzw. Entsprechung zwischen jedem Zuweisungssegment und wenigstens einem Verkehrskanalsegment herzustellen;
Mittel zum Bestimmen, ob das Identifikationselement (401) des Drahtlosendgeräts in irgendwelchen detektierten Zuweisungssegmenten (201) enthalten ist; und
Mittel, die auf eine Bestimmung, dass das Identifikationselement (401) des Drahtlosendgeräts in einem detektierten Zuweisungssegment (201) vorliegt, ansprechen, zum Senden bzw. Übertragen von Verkehrsdaten in dem Aufwärtsverbindungsverkehrssegment (202, 203), das mit dem Zuweisungssegment (201) assoziiert ist, das das Identifikationselement (401) des Drahtlosendgeräts beinhaltet, wobei ein Segment ein endliches Zeitintervall und eine Bandbreite definiert.

22. Ein Verfahren zur Verwendung in einem Drahtlosendgerät (103-1, 103-2, ..., 103-Y) in einem Mehrfachzugriffskommunikationssystem (100) zum Detektieren einer Zuteilung einer Aufwärtsverbindungs- bzw. UplinkVerkehrsressource an ein Drahtlosendgerät (103-1, 103-2, ..., 103-Y), das die folgenden Schritte aufweist:
Überwachen von empfangenen Zuweisungssegmenten (201) eines Zuweisungskanals für Zuweisungen von Aufwärtsverbindungsverkehrssegmenten (202, 203), wobei jedes Zuweisungssegment mit wenigstens einem Segment eines Verkehrskanals assoziiert ist, um dadurch eine Übereinstimmung bzw. Entsprechung zwischen jedem Zuweisungssegment und wenigstens einem Verkehrskanalsegment herzustellen;
Bestimmen, ob das Identifikationselement (401) des Drahtlosendgeräts in irgendwelchen detektierten Zuweisungssegmenten (201) enthalten ist; und
ansprechend auf eine Bestimmung, dass das Identifikationselement (401) des Drahtlosendgeräts in einem detektierten Zuweisungssegment (201) vorliegt, Senden bzw. Übertragen von Verkehrsdaten in dem Aufwärtsverbindungsverkehrssegment (202, 203), das mit dem Zuweisungssegment (201) assoziiert ist, das das Identifikationselement (401) des Drahtlosendgeräts beinhaltet, wobei ein Segment ein endliches Zeitintervall und eine Bandbreite definiert.

23. Vorrichtung zur Verwendung in einem Drahtlosmehrfachzugriffskommunikationssystem (100), das wenigstens eine Basisstation (101) und eine Vielzahl von Drahtlosendgeräten (103-1, 103-2, ..., 103-Y) aufweist und das wenigtens eine Drahtloskanalressource zum Zuteilen einer Verkehrskanalressource an eines oder mehrere der Drahtlosendgeräte (103-1, 103-2, ..., 103-Y) beinhaltet, die Folgendes aufweist:
Mittel zum Liefern von Identifikationselementen (401), die für ein aktives Drahtlosendgerät der Vielzahl von Drahtlosendgeräten (103-1, 103-2, ..., 103-Y) spezifisch sind; und
Mittel zum Senden bzw. Übertragen eines spezifischen einen der Drahtlosendgerätidentifikationselemente (401) in einem Zuweisungssegment (201) eines Zuweisungskanals (301) der Verkehrskanalressource, wobei das Zuweisungssegment (201) in einer vorgegebenen festgelegten Weise mit einem Verkehrssegment (202, 203) eines Verkehrskanals (302) der Verkehrskanalressource assoziiert ist, die für das spezifische Drahtlosendgerät vorgesehen (103-1, 103-2, ... , 103-Y) ist;
wobei der Zuweisungskanal eine Vielzahl von Zuweisungssegmenten aufweist und jedes Zuweisungssegment mit wenigstens einem Verkehrssegment des Verkehrskanals assoziiert ist, um dadurch eine Entsprechung bzw. Übereinstimmung zwischen jedem Zuweisungssegment und wenigstens einem Verkehrskanalsegment herzustellen; und
wobei ein Segment ein endliches Zeitintervall und eine Bandbreite definiert.

24. Vorrichtung nach Anspruch 23, die weiter Mittel beinhaltet zum Partitionieren der Drahtloskanalressource in wenigstens einen Zuweisungskanal (301), der eines oder mehrere Zuweisungssegmente (201) beinhaltet, und einen Verkehrskanal (302), der eine Vielzahl von Verkehrssegmenten (202, 203) beinhaltet, und zum Assoziieren jedes der Zuweisungssegmente (201) mit den Verkehrssegmenten (202, 203) auf eine vorgegebene Weise, wobei der Zuweisungskanal (301) für alle aktiven Drahtlosendgeräte der Vielzahl von Drahtlosendgeräten (103-1, 103-2, ..., 103-Y) gemeinsam vorliegt.

25. Vorrichtung nach Anspruch 23, die weiter Mittel zum Einteilen der Zuweisung der Verkehrssegmente (202, 203) gemäß einer vorgegebenen Einteilungsvorschrift beinhaltet.

26. Vorrichtung nach Anspruch 23, die weiter Mittel zum Detektieren einer Zuteilung einer Abwärtsverbindungsverkehrsressource zu dem Drahtlosendgerät (103-1, 103-2, ..., 103-Y) beinhaltet.

27. Vorrichtung nach Anspruch 26, wobei die Mittel zum Detektieren weiter Folgendes beinhaltet: Mittel zum Überwachen von empfangenen Zuweisungssegmenten (201) für Zuweisungen von Abwärtsverbindungsverkehrssegmenten (202, 203), Mittel zum Bestimmen, ob das Identifikationselement (401) des Drahtlosendgeräts in irgendwelchen detektierten Zuweisungssegmenten (201) enthalten ist, und Mittel, die auf eine Bestimmung, dass das Identifikationselement (401) des Drahtlosendgeräts in einem detektierten Zuweisungssegment (201) vorliegt, ansprechen, zum Empfangen von Verkehrsdaten von dem Abwärtsverbindungsverkehrssegment (202, 203), das mit dem Zuweisungssegment (201) assoziiert ist, das das Identifikationselement (401) des Drahtlosendgeräts beinhaltet.

28. Vorrichtung nach Anspruch 23, die Mittel zum Detektieren einer Zuteilung einer Aufwärtsverbindungsverkehrsressource zu dem Drahtlosendgerät (103-1, 103-2, ..., 103-Y) beinhaltet.

29. Vorrichtung nach Anspruch 28, wobei die Mittel zum Detektieren Folgendes beinhalten: Mittel zum Überwachen von empfangenen Zuweisungssegmenten (201) für Zuweisungen von Aufwärtsverbindungsverkehrssegmenten (202, 203), Mittel zum Bestimmen, ob das Identifikationselement (401) des Drahtlosendgeräts in irgendwelchen detektierten Zuweisungssegmenten (201) enthalten ist, und Mittel, die auf eine Bestimmung, dass das Identifikationselement (401) des Drahtlosendgeräts in einem detektierten Zuweisungssegment (201) vorliegt, ansprechen, zum Senden bzw. Übertragen von Verkehrsdaten von dem Drahtlosendgerät (103-1, 103-2, ..., 103-Y) in dem Aufwärtsverbindungsverkehrssegment (202, 203), das mit dem Zuweisungssegment (201) assoziiert ist, das das Identifikationselement (401) des Drahtlosendgeräts beinhaltet.

30. Vorrichtung nach Anspruch 23, die weiter Folgendes aufweist:
Mittel zum Partitionieren der Drahtloskanalressource in wenigstens einen Zuweisungskanal (301), der eines oder mehrere Zuweisungssegmente (201) beinhaltet, und einen Verkehrskanal (302), der eine Vielzahl von Verkehrssegmenten (202, 203) beinhaltet, und zum Assozüeren jedes der Zuweisungssegmente (201) mit den Verkehrssegmenten (202, 203) auf eine vorgegebene Weise; und
wobei die Mittel zum Senden bzw. Übertragen ein Sender (108) sind.

31. Vorrichtung nach Anspruch 30, wobei der Zuweisungskanal (301) für alle aktiven Drahtlosendgeräte der Vielzahl von Drahtlosendgeräten (103-1, 103-2, ..., 103-Y) vorliegt.

32. Vorrichtung nach Anspruch 31, wobei das Partitionieren der Drahtloskanal-ressource in den Zuweisungskanal (301) und den Verkehrskanal (302) auf eine festgelegte Weise stattfindet.

33. Vorrichtung nach Anspruch 32, wobei die Verkehrssegmente (202, 203) eingesetzt werden, um Verkehrsdaten zu transportieren.

34. Vorrichtung nach Anspruch 33, wobei jedes der Verkehrssegmente (202, 203) ein vorgegebenes endliches Zeitintervall und eine vorgegebene Bandbreite hat.

35. Vorrichtung nach Anspruch 33, wobei jedes der Zuweisungssegmente (201) ein vorgegebenes endliches Zeitintervall und eine vorgegebene Bandbreite hat.

36. Vorrichtung nach Anspruch 30, wobei der Sender (108) weiter vorgegebene Parameter der physikalischen Schicht in vorgeschriebenen Zuweisungssegmenten der einen oder mehreren Zuweisungssegmente (201) sendet bzw. überträgt.

37. Vorrichtung nach Anspruch 36, wobei die Parameter der physikalischen Schicht Darstellungen der assoziierten Verkehrsdatencodierrate und Bitspro-Symbol, die in dem assoziierten Verkehrssegment (202, 203) eingesetzt werden sollen, beinhalten.

38. Vorrichtung nach Anspruch 30, die weiter ein Einteilungselement bzw. Scheduler (502) zum Einteilen der Zuweisung der Verkehrssegmente (202, 203) gemäß einer vorgegebenen Einteilungsvorschrift beinhaltet.

39. Vorrichtung nach Anspruch 38, wobei das Einteilungselement (502) den Status von allen aktiven Drahtlosendgeräten (103-1, 103-2, ..., 103-Y) überprüft, eine Bestimmung darüber durchführt, welches der aktiven Drahtlosendgeräte (103-1, 103-2, ..., 103-Y) Verkehrsdaten in einem Abwärtsverbindungsverkehrssegment (202, 203) empfangen soll und wobei der Sender (108) das Identifikationselement des eingeteilten Drahtlosendgeräts (103-1, 103-2, ..., 103-Y) in einem Zuweisungssegment (201), das mit dem Abwärtsverbindungsverkehrssegment (202, 203) assoziiert ist, sendet bzw. überträgt und Verkehrsdaten für das eingeteilte Drahtlosendgerät in dem Abwärtsverbindungsverkehrssegment (202, 203) sendet bzw. überträgt.

40. Vorrichtung nach Anspruch 39, wobei der Status, der überprüft wird, Verkehrspriorität, Verkehrswarteschlangenstatus und einen Zustand des physikalischen Kanals beinhaltet.

41. Vorrichtung nach Anspruch 38, wobei das Einteilungselement (502) den Status von allen aktiven Drahtlosendgeräten (103-1, 103-2, ..., 103-Y) überprüft, eine Bestimmung durchführt, welches der aktiven Drahtlosendgeräte (103-1, 103-2, ..., 103-Y) Verkehrsdaten in einem Aufwärtsverbindungsverkehrssegment (202, 203) senden soll und weiter einen Empfänger (110) zum Empfangen von Verkehrsdaten von dem eingeteilten Drahtlosendgerät in dem Aufwärtsverbindungsverkehrssegment (202, 203) beinhaltet.

42. Vorrichtung nach Anspruch 41, wobei der Status, der überprüft wird, Verkehrspriorität, Verkehrswarteschlangenstatus und einen Zustand eines physikalischen Kanals beinhaltet.

43. Vorrichtung nach Anspruch 30, die weiter einen Detektor zum Detektieren einer Zuteilung einer Abwärtsverbindungsverkehrsressource an das Drahtlosendgerät (103-1, 103-2, ..., 103-Y) beinhaltet.

44. Vorrichtung nach Anspruch 43, wobei der Detektor weiter Folgendes beinhaltet: ein Überwachungselement zum Überwachen von empfangenen Zuweisungssegmenten (201) für Zuweisungen von Abwärtsverbindungsverkehrssegmenten (202, 203) und zum Bestimmen, ob das Identifikationselement (401) des Drahtlosendgeräts in irgendwelchen detektierten Zuweisungssegmenten (201) enthalten ist, und einen Empfänger (110), der auf eine Bestimmung anspricht, dass das Identifikationselement (401) des Drahtlosendgeräts in einem detektierten Zuweisungssegment (201) vorliegt, zum Empfangen von Verkehrsdaten von dem Abwärtsverbindungsverkehrssegment (202, 203), das mit dem Zuweisungssegment (201) assoziiert ist, das das Identifikationselement (401) des Drahtlosendgeräts beinhaltet.

45. Vorrichtung nach Anspruch 30, die einen Detektor zum Detektieren einer Zuteilung einer Aufwärtsverbindungsverkehrsressource an das Drahtlosendgerät (103-1, 103-2, ..., 103-Y) beinhaltet.

46. Vorrichtung nach Anspruch 45, wobei der Detektor weiter Folgendes beinhaltet: ein Überwachungselement zum Überwachen von empfangenen Zuweisungssegmenten (201) für Zuweisungen von Aufwärtsverbindungsverkehrssegmenten (202, 203) und zum Bestimmen, ob das Identifikationselement (401) des Drahtlosendgeräts in irgendwelchen detektierten Zuweisungssegmenten (201) enthalten ist, und einen Sender (108), der auf eine Bestimmung anspricht, dass das Identifikationselement (401) des Drahtlosendgeräts in einem detektierten Zuweisungssegment (201) vorliegt, zum Senden bzw. Übertragen von Verkehrsdaten von dem Drahtlosendgerät (103-1, 103-2, ..., 103-Y) in dem Aufwärtsverbindungsverkehrssegment (202, 203), das mit dem Zuweisungssegment (201) assoziiert ist, das das Identifikationselement (401) des Drahtlosendgeräts beinhaltet.

## Revendications

1. Procédé pour utilisation dans un système de communications sans fil à accès multiple (100) comprenant au moins une station de base (101) et une pluralité de terminaux sans fil (103-1, 103-2,... , 103-Y) pour allouer une ressource de canal de communication à un ou plusieurs des terminaux sans fil (103-1, 103-2,... , 103-Y), comprenant les étapes suivantes :
associer chaque segment d'un canal d'affectation (201) à au moins un segment d'un canal de communication (202, 203) pour établir ainsi une correspondance entre chaque segment de canal d'affectation (201) et au moins un segment de canal de communication (202, 203) ; et
transmettre un identificateur de terminal sans fil (401) dans un premier des segments de canal d'affectation (201), l'identificateur de terminal sans fil (401) correspondant à un terminal sans fil (103-1, 103-2,... , 103-Y) auquel le segment de canal de communication (202, 203), correspondant au premier segment de canal d'affectation (201), a été dédié, un segment définissant un intervalle de temps fini et une largeur de bande.

2. Procédé selon la revendication 1, dans lequel l'identificateur de terminal sans fil (401) correspond à un seul terminal sans fil.

3. Procédé selon la revendication 1, dans lequel l'identificateur de terminal sans fil (401) correspond à un groupe de terminaux sans fil (103-1, 103-2,... , 103-Y) auquel le segment de canal de communication (202, 203), correspondant au premier segment de canal d'affectation (201), a été dédié pour être utilisé comme liaison descendante par le groupe de terminaux sans fil (103-1, 103-2,... , 103-Y).

4. Procédé selon la revendication 1,
dans lequel le canal d'affectation (301) est commun à tous les terminaux actifs de la pluralité de terminaux sans fil (103-1, 103-2,... , 103-Y) ; et
dans lequel les segments de communication (202, 203) sont utilisés pour transporter des données de trafic de communication.

5. Procédé selon la revendication 4, dans lequel chacun des segments de communication (202, 203) a un intervalle de temps fini et une largeur de bande fixes.

6. Procédé selon la revendication 4, dans lequel chacun des segments d'affectation (201) a un intervalle de temps fini et une largeur de bande fixes.

7. Procédé selon la revendication 1, dans lequel l'étape de transmission comprend une étape de transmission de paramètres de couche physique prédéterminés dans certains segments prédéterminés desdits un ou plusieurs segments d'affectation (201).

8. Procédé selon la revendication 7, dans lequel les paramètres de couche physique comprennent des représentations du débit de codage des données de trafic de communication et du nombre de bits par symbole associés, à utiliser dans le segment de communication associé (202, 203).

9. Procédé selon la revendication 1, comprenant en outre une étape consistant à planifier l'affectation des segments de communication (202, 203) en fonction d'une politique de planification prédéfinie.

10. Procédé selon la revendication 9, dans lequel l'étape de planification inclut les étapes consistant à vérifier le statut de tous les terminaux sans fil (103-1, 103-2,... , 103-Y) actifs, en réponse à la vérification du statut, déterminer lequel des terminaux sans fil actifs (103-1, 103-2,... , 103-Y) doit recevoir des données de trafic de communication dans un segment de communication de liaison descendante (202, 203), transmettre l'identificateur (401) du terminal sans fil (103-1, 103-2,... , 103-Y) planifié dans un segment d'affectation (201) associé au segment de communication de liaison descendante (202, 203) et transmettre des données de trafic de communication pour le terminal sans fil (103-1, 103-2,... , 103-Y) planifié dans le segment de communication de liaison descendante (202, 203).

11. Procédé selon la revendication 10, dans lequel le statut qui est vérifié inclut une priorité de communication, un statut de file d'attente de communication est un état de canal physique.

12. Procédé selon la revendication 9, dans lequel l'étape de planification inclut les étapes consistant à vérifier le statut de tous les terminaux sans fil (103-1, 103-2,... , 103-Y) actifs, en réponse à la vérification du statut, déterminer lequel des terminaux sans fil (103-1, 103-2,... , 103-Y) actif doit transmettre des données de trafic de communication dans un segment de communication de liaison montante (202, 203), transmettre l'identificateur (401) du terminal sans fil planifié (103-1, 103-2,... , 103-Y) dans un segment d'affectation (201) associé au segment de communication de liaison montante (202, 203) et recevoir des données de trafic de communication à partir du terminal sans fil (103-1, 103-2,... , 103-Y) planifié dans le segment de communication de liaison montante (202, 203).

13. Procédé selon la revendication 12, dans lequel le statut qui est vérifié inclut une priorité de communication, un statut de file d'attente de communication et un état de canal physique.

14. Procédé selon la revendication 1, comprenant une étape consistant à détecter l'allocation d'une ressource de communication en liaison descendante au terminal sans fil (103-1, 103-2,... , 103-Y).

15. Procédé selon la revendication 14, dans lequel l'étape de détection comprend les étapes consistant à surveiller des segments d'affectation (201) reçus pour des affectations de segments de communication de liaison descendante (202, 203), déterminer si l'identificateur du terminal sans fil (401) est inclus dans tous les segments d'affectation (201) détectés et en réponse à une détermination que l'identificateur du terminal sans fil (401) est dans un segment d'affectation (201) détecté, recevoir des données de trafic de communication à partir du segment de communication de liaison descendante (202, 203) associé au segment d'affectation (201) comprenant l'identificateur du terminal sans fil (401).

16. Procédé selon la revendication 1, comprenant une étape de détection d'allocation d'une ressource de communication en liaison montante au terminal sans fil (103-1, 103-2,... , 103-Y) .

17. Procédé selon la revendication 16, dans lequel l'étape de détection inclut les étapes consistant à surveiller des segments d'affectation (201) reçus pour des affectations de segments de communication de liaison montante (202, 203), déterminer si l'identificateur du terminal sans fil (401) est inclus dans l'un quelconque des segments d'affectation (201) détectés et en réponse à une détermination que l'identificateur du terminal sans fil (401) est dans un segment d'affectation (201) détecté, transmettre des données de trafic de communication à partir du terminal sans fil (103-1, 103-2,... , 103-Y) dans le segment de communication de liaison montante (202, 203) associé au segment d'affectation (201) comprenant l'identificateur du terminal sans fil (401).

18. Procédé selon la revendication 1, comprenant en outre l'étape consistant à :
transmettre un identificateur de terminal sans fil (401) spécifique dans un segment d'affectation (201) d'un canal d'affectation (301) de la ressource de canal de communication, le segment d'affectation (201) étant associé de manière fixe prédéterminée à un segment de communication (202, 203) d'un canal de communication (302) de la ressource de canal de communication destinée au terminal sans fil (103-1, 103-2,... , 103-Y) spécifique.

19. Appareil pour utilisation dans un terminal sans fil (103-1, 103-2,... , 103-Y) dans un système de communications sans fil à accès multiple (100) pour détecter l'allocation d'une ressource de communication en liaison descendante au terminal sans fil (103-1, 103-2,... , 103-Y) comprenant :
des moyens pour surveiller des segments d'affectation (201) reçus d'un canal d'affectation pour des affectations de segments de communication de liaison descendante (202, 203), chaque segment d'affectation étant associé à au moins un segment d'un canal de communication pour établir ainsi une correspondance entre chaque segment d'affectation et au moins un segment de canal de communication ;
des moyens pour déterminer si l'identificateur du terminal sans fil (401) est inclus dans l'un quelconque des segments d'affectation (201) détectés ; et
des moyens agissant en réponse à une détermination que l'identificateur du terminal sans fil (401) est dans un segment d'affectation (201) détecté, pour recevoir des données de trafic de communication à partir du segment de communication de liaison descendante (202, 203) associé au segment d'affectation (201) comprenant l'identificateur du terminal sans fil (401), un segment définissant un intervalle de temps fini et une largeur de bande.

20. Procédé pour utilisation dans un terminal sans fil (103-1, 103-2,... , 103-Y) dans un système de communications sans fil à accès multiple (100) pour détecter l'allocation d'une ressource de communication en liaison descendante au terminal sans fil (103-1, 103-2,... , 103-Y), comprenant les étapes suivantes :
surveiller des segments d'affectation (201) reçus d'un canal d'affectation pour des affectations de segments de communication de liaison descendante (202, 203), chaque segment d'affectation étant associé à au moins un segment d'un canal de communication pour établir ainsi une correspondance entre chaque segment d'affectation et au moins un segment de canal de communication ;
déterminer si l'identificateur du terminal sans fil (401) est inclus dans l'un quelconque des segments d'affectation (201) détectés ; et
en réponse à une détermination que l'identificateur du terminal sans fil (401) est dans un segment d'affectation (201) détecté, recevoir des données de trafic de communication à partir du segment de communication de liaison descendante (202, 203) associé au segment d'affectation (201) comprenant l'identificateur du terminal sans fil (401), un segment définissant un intervalle de temps fini et une largeur de bande.

21. Appareil pour utilisation dans un terminal sans fil (103-1, 103-2,... , 103-Y) dans un système de communication sans fil à accès multiple (100) pour détecter l'allocation d'une ressource de communication en liaison montante au terminal sans fil ((103-1, 103-2,... , 103-Y), comprenant :
des moyens pour surveiller des segments d'affectation (201) reçus d'un canal d'affectation pour des affectations de segments de communication de liaison montante (202, 203), chaque segment d'affectation étant associé à au moins un segment d'un canal de communication pour établir ainsi une correspondance entre chaque segment d'affectation et au moins un segment de canal de communication ;
des moyens pour déterminer si l'identificateur du terminal sans fil (401) est inclus dans l'un quelconque des segments d'affectation (201) détectés ; et
des moyens agissant en réponse à une détermination que l'identificateur du terminal sans fil (401) est dans un segment d'affectation (201) détecté, pour transmettre des données de trafic de communication dans le segment de communication de liaison montante (202, 203) associé au segment d'affectation (201) comprenant l'identificateur du terminal sans fil (401), un segment définissant un intervalle de temps fini et une largeur de bande.

22. Procédé pour utilisation dans un terminal sans fil (103-1, 103-2,... , 103-Y) dans un système de communications sans fil à accès multiple (100) pour détecter l'allocation d'une ressource de communication en liaison montante au terminal sans fil ((103-1, 103-2,... , 103-Y), comprenant les étapes suivantes :
surveiller des segments d'affectation (201) reçus d'un canal d'affectation pour des affectations de segments de communication en liaison montante (202, 203), chaque segment d'affectation étant associé à au moins un segment d'un canal de communication pour établir ainsi une correspondance entre chaque segment d'affectation et au moins un segment de canal de communication ;
déterminer si l'identificateur du terminal sans fil (401) est inclus dans l'un quelconque des segments d'affectation (201) détectés ; et
en réponse à une détermination que l'identificateur du terminal sans fil (401) est dans un segment d'affectation (201) détecté, transmettre des données de trafic de communication dans le segment de communication de liaison montante (202, 203) associé au segment d'affectation (201) comprenant l'identificateur du terminal sans fil (401), un segment définissant un intervalle de temps fini et une largeur de bande.

23. Appareil pour utilisation dans un système de communications sans fil à accès multiple (100) comprenant au moins une station de base (101) et une pluralité de terminaux sans fil (103-1, 103-2,... , 103-Y) et comprenant une ressource de canal sans fil pour allouer une ressource de canal de communication à un ou plusieurs des terminaux sans fil (103-1, 103-2,... , 103-Y), comprenant :
des moyens pour fournir des identificateurs (401) spécifiques à des terminaux actifs de la pluralité de terminaux sans fil (103-1, 103-2,... , 103-Y) ; et
des moyens pour transmettre un identificateur spécifique parmi les identificateurs de terminal sans fil (401) dans un segment d'affectation (201) d'un canal d'affectation (301) de la ressource de canal de communication, le segment d'affectation (201) étant associé d'une manière fixe prédéterminée à un segment de communication (202, 203) d'un canal de communication (302) de la ressource de canal de communication destiné au terminal sans fil (103-1, 103-2,... , 103-Y) spécifique;
dans lequel le canal d'affectation comprend une pluralité de segments d'affectation et chaque segment d'affectation est associé à au moins un segment de communication du canal de communication pour établir ainsi une correspondance entre chaque segment d'affectation et au moins un segment de canal de communication; et
dans lequel un segment définit un intervalle de temps fini et une largeur de bande.

24. Appareil selon la revendication 23, comprenant en outre des moyens pour partager la ressource de canal sans fil entre au moins un canal d'affectation (301) comprenant un ou plusieurs segments d'affectation (201) et un canal de communication (302) comprenant une pluralité de segments de communication (202, 203), et pour associer chacun des segments d'affectation (201) avec les segments de communication (202, 203) d'une manière prédéterminée, le canal d'affectation (301) étant commun à tous les terminaux actifs de la pluralité de terminaux (103-1, 103-2,... , 103-Y).

25. Appareil selon la revendication 23, comprenant en outre des moyens pour planifier l'affectation des segments de communication (202, 203) en fonction d'une politique de planification prédéterminée.

26. Appareil selon la revendication 23, comprenant en outre des moyens pour détecter l'allocation d'une ressource de trafic de communication en liaison descendante au terminal sans fil (103-1, 103-2,... , 103-Y).

27. Appareil selon la revendication 26, dans lequel les moyens pour détecter comprennent des moyens pour surveiller des segments d'affectation (201) reçus pour des affectations de segments de communication de liaison descendante (202, 203), des moyens pour déterminer si l'identificateur du terminal sans fil (401) est inclus dans l'un quelconque des segments d'affectation (201) détectés, et des moyens agissant en réponse à une détermination que l'identificateur du terminal sans fil (401) est dans un segment d'affectation (201) détecté pour recevoir des données de trafic de communication à partir du segment de communication de liaison descendante (202, 203) associé au segment d'affectation (201) comprenant l'identificateur du terminal sans fil (401).

28. Appareil selon la revendication 23, comprenant des moyens pour détecter l'allocation d'une ressource de trafic de communication en liaison montante au terminal sans fil (103-1, 103-2,... , 103-Y).

29. Appareil selon la revendication 28, dans lequel les moyens pour détecter comprennent des moyens pour surveiller des segments d'affectation (201) reçus pour des affectations de segments de communication de liaison montante (202, 203), des moyens pour déterminer si l'identificateur du terminal sans fil (401) est inclus dans l'un quelconque des segments d'affectation (201) détectés, et des moyens agissant en réponse à une détermination que l'identificateur du terminal sans fil (401) est dans un segment d'affectation (201) détecté pour transmettre des données de trafic de communication à partir du terminal sans fil (103-1, 103-2,... , 103-Y) dans le segment de communication de liaison montante (202, 203) associé au segment d'affectation (201) comprenant l'identificateur du terminal sans fil (401).

30. Appareil selon la revendication 23, comprenant en outre :
des moyens pour partager la ressource de canal sans fil entre au moins un canal d'affectation (301) comprenant un ou plusieurs segments d'affectation (201) et un canal de communication (302) comprenant une pluralité de segments de communication (202, 203), et pour associer chacun des segments d'affectation (201) à des segments de communication (202, 203) d'une manière prédéterminée ; et
dans lequel les moyens pour transmettre sont un émetteur (108).

31. Appareil selon la revendication 30, dans lequel le canal d'affectation (301) est commun à tous les terminaux actifs de la pluralité de terminaux sans fil (103-1, 103-2,... , 103-Y).

32. Appareil selon la revendication 31, dans lequel le partage de la ressource de canal sans fil entre le canal d'affectation (301) et le canal de communication (302) se fait de manière fixe.

33. Appareil selon la revendication 32, dans lequel les segments de communication (202, 203) sont utilisés pour transporter des données de trafic de communication.

34. Appareil selon la revendication 33, dans lequel chacun des segments de communication (202, 203) a un intervalle de temps fini et une largeur de bande prédéterminés.

35. Appareil selon la revendication 33, dans lequel chacun des segments d'affectation (201) a un intervalle de temps fini et une largeur de bande prédéterminés.

36. Appareil selon la revendication 30, dans lequel l'émetteur (108) émet en outre des paramètres de couche physique prédéterminés dans certains segments prédéterminés desdits un ou plusieurs segments d'affectation (201).

37. Appareil selon la revendication 36, dans lequel les paramètres de couche physique comprennent des représentations du débit de codage de données de trafic de communication et du nombre de bits par symbole associés, à employer dans le segment de communication (202, 203) associé.

38. Appareil selon la revendication 30, comprenant en outre un planificateur (502) pour planifier l'affectation des segments de communication (202, 203) en fonction d'une politique de planification prédéterminée.

39. Appareil selon la revendication 38, dans lequel le planificateur (502) vérifie le statut de tous les terminaux sans fil (103-1, 103-2,... , 103-Y) actifs, réalise une détermination duquel des terminaux sans fil (103-1, 103-2,... , 103-Y) actifs doit recevoir des données de trafic de communication dans un segment de communication de liaison descendante (202, 203), et dans lequel l'émetteur (108) transmet l'identificateur du terminal sans fil (103-1, 103-2,... , 103-Y) planifié dans un segment d'affectation (201) associé au segment de communication de liaison descendante (202, 203) et transmet des données de trafic de communication pour le terminal sans fil planifié dans le segment de communication de liaison descendante (202, 203).

40. Appareil selon la revendication 39, dans lequel le statut qui est vérifié comprend une priorité de communication, un statut de file d'attente de communication et un état de canal physique.

41. Appareil selon la revendication 38, dans lequel le planificateur (502) vérifie le statut de tous les terminaux sans fil (103-1, 103-2,... , 103-Y) actifs, réalise une détermination duquel des terminaux sans fil (103-1, 103-2,... , 103-Y) actifs doit transmettre des données de trafic de communication dans un segment de communication de liaison montante (202, 203), et comprenant en outre un récepteur (110) pour recevoir des données de trafic de communication à partir du terminal sans fil planifié dans le segment de communication de liaison montante (202, 203).

42. Appareil selon la revendication 41, dans lequel le statut qui est vérifié comprend une priorité de communication, un statut de file d'attente de communication et un état de canal physique.

43. Appareil selon la revendication 30, comprenant en outre un détecteur pour détecter une allocation d'une ressource de trafic de communication en liaison descendante au terminal sans fil (103-1, 103-2,... , 103-Y).

44. Appareil selon la revendication 43, dans lequel le détecteur comprend un dispositif de surveillance pour surveiller des segments d'affectation (201) reçus pour des affectations de segments de communication en liaison descendante (202, 203) et pour déterminer si l'identificateur du terminal sans fil (401) est inclus dans l'un quelconque des segments d'affectation (201) détectés, et un récepteur (110) agissant en réponse à une détermination que l'identificateur du terminal sans fil (401) est dans un segment d'affectation (201) détecté pour recevoir des données de trafic de communication à partir du segment de communication de liaison descendante (202, 203) associé au segment d'affectation (201) comprenant l'identificateur du terminal sans fil (401).

45. Appareil selon la revendication 30, comprenant un détecteur pour détecter l'allocation d'une ressource de trafic de communication en liaison montante au terminal sans fil (103-1, 103-2,... , 103-Y).

46. Appareil selon la revendication 45, dans lequel le détecteur comprend un dispositif de surveillance pour surveiller des segments d'affectation (201) reçus pour des affectations de segments de communication en liaison montante (202, 203) et pour déterminer si l'identificateur du terminal sans fil (401) est inclus dans l'un quelconque des segments d'affectation (201) détectés, et un émetteur (108) agissant en réponse à une détermination que l'identificateur du terminal sans fil (401) est dans un segment d'affectation (201) détecté pour transmettre des données de trafic de communication à partir du terminal sans fil (103-1, 103-2,... , 103-Y) dans le segment de communication de liaison montante (202, 203) associé au segment d'affectation (201) comprenant l'identificateur du terminal sans fil (401).
